# EUROPEAN PATENT APPLICATION

(11) **EP 1 862 355 A2**
(43) Date of publication of application: **05.12.2007**
(21) Application number: 07380101.1
(22) Date of filing: 11.04.2007
(51) Int. Cl.: B60R 11/02

(54) **Fixing device for a car radio front**

(30) Priority: 02.06.2006 ES 200601280 U
(71) Applicant: Seat, S.A., 08760 Martorell (ES)
(72) Inventor: Demers, Marc, c/o Seat, S.A., 08760 Martorell Barcelona (ES); Perez, Perez, Fernando, c/o Seat, S.A., 08760 Martorell Barcelona (ES)
(74) Representative: Carvajal y Urquijo, Isabel

(57) **Abstract**

The invention relates to a fixing device for a car radio face with invisible detachment, specifically for a radio face which is fixed to a display face which, framing the corresponding display, is in turn fixed to the panel or dashboard of the vehicle. The mentioned display face incorporates in its periphery a plurality of appropriately distributed side supports which are frontally bent by way of hooks and which perimetrally frame the radio face, an elastic metal clamp being assembled on each of said supports, said clamp intended to be locked in a groove of the radio face, and said radio face having as many grooves as supports or metal clamps incorporated in the display face.

## Description

### OBJECT OF THE INVENTION

The present invention relates to a device which has been especially designed for fixing the face of a radio apparatus in the dashboard or panel of an automobile, such that said radio face conceals both the fixing means for fixing the display face to the panel and its own fixing means.

Therefore, the object of the invention is to obtain a detachable radio face, but the fixing or assembly means of which with respect to the display face are invisible, and to obtain at the same time that the assembly of said face is extremely fast and easy, virtually instantaneous.

The invention is therefore comprised in the field of radio apparatuses and the like used in the automotive field.

### BACKGROUND OF THE INVENTION

In the mentioned field of application of the invention, radio faces are currently fixed by means of metal clamps, with a visible detachment system, through holes, or with detachment by means of pulling. Using screws to fix the face is also a technique used in this field.

It is desirable to obtain an invisible detachment system, but to date the solutions known to that effect follow very complex designs, subsequently increasing assembly costs, sometimes even making it necessary to ignore the design appearance in order to configure such concealed assembly system. In any case, complicated and rather unpractical fixings are required to ensure tolerances.

### DESCRIPTION OF THE INVENTION

The device proposed by the invention resolves in a fully satisfactory manner the drawbacks described above, allowing fixing by means of a simple pressure coupling and a concealed detachment based on a pair of metal flanges acting on the mechanism, as will be seen below, accessing it through virtually unnoticeable spaces or gaps.

More specifically, the radio face is fixed to the display face, previously fixed to the panel, and the device consists of a plurality of metal clamps assembled on respective supports appropriately distributed on the periphery of the display face, said supports being frontally projected and intended to be outside the radio face, which has grooves in its opening which coincide in position and number with the mentioned supports and in which the mentioned clamps are to be pressure coupled, such that the radio face must simply be "plugged into" the display face so that the former is fixed to the latter, which was previously fixed to the panel as mentioned before.

Also as mentioned previously, there is a slight allowance between the radio face and the display that is unnoticeable when observing the radio, such that metal flanges acting as scissors can be introduced through said allowance, being supported on the display through rubber stops and acting on the locking metal flanges, with the subsequent release of the radio face.

A clean design is thus obtained because there is no need for a visible detachment system which, on an aesthetic level, does not provide good results; a fast and easy assembly of the radio face is obtained at the same time, with a correct assurance of display-face-panel tolerances, and this assembly by means of clamps further entails a savings in assembly line times because it is not necessary to screw the face as normally occurs.

### DESCRIPTION OF THE DRAWINGS

To complement the description which is being made and for the purpose of aiding to better understand the features of the invention according to a preferred practical embodiment thereof, a set of drawings is attached as an integral part of said description which with an illustrative and non-limiting manner shows the following:
Figure 1 shows a partial frontal perspective view of the panel or dashboard of a vehicle provided with a radio apparatus or the like, provided with the fixing device for fixing its face forming the object of the present invention.
Figure 2 shows another perspective view of the radio apparatus with its face, according to another observation angle.
Figure 3 shows another perspective view of a detail of the assembly represented in the previous figures at the level of the connection between panel and display.
Figure 4 again shows another perspective view of a detail of the same assembly, now at the level of connection between the display face and the panel.

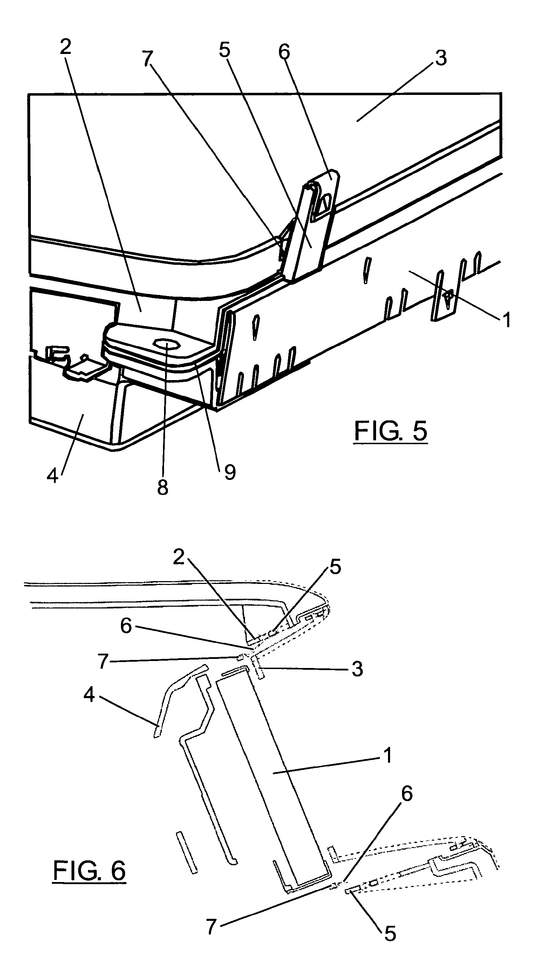

Figure 5 shows another partial perspective view of the same assembly of the previous figures, now at the level of the connection detail between the display face and the radio face.
Figure 6 shows a sectional profile view according to section line A-A of Figure 1.

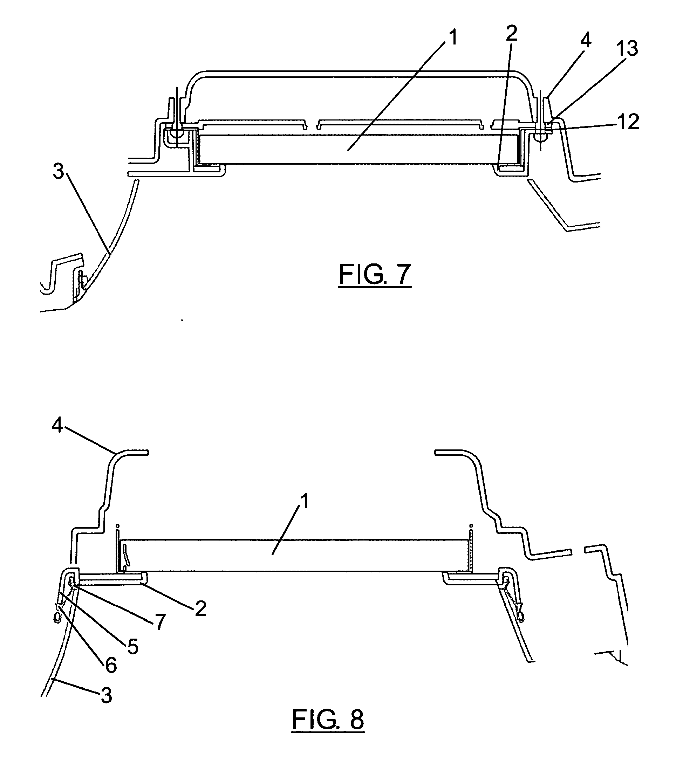

Figures 7 and 8 show respective plan views of the device, sectioned in Figure 7 according to section line B-B of Figure 1 and in Figure 8 according to section line C-C of the same figure.
Figure 9 finally shows a section similar to that of Figure 6 but in which the detachment tool is inserted.

### PREFERRED EMBODIMENT OF THE INVENTION

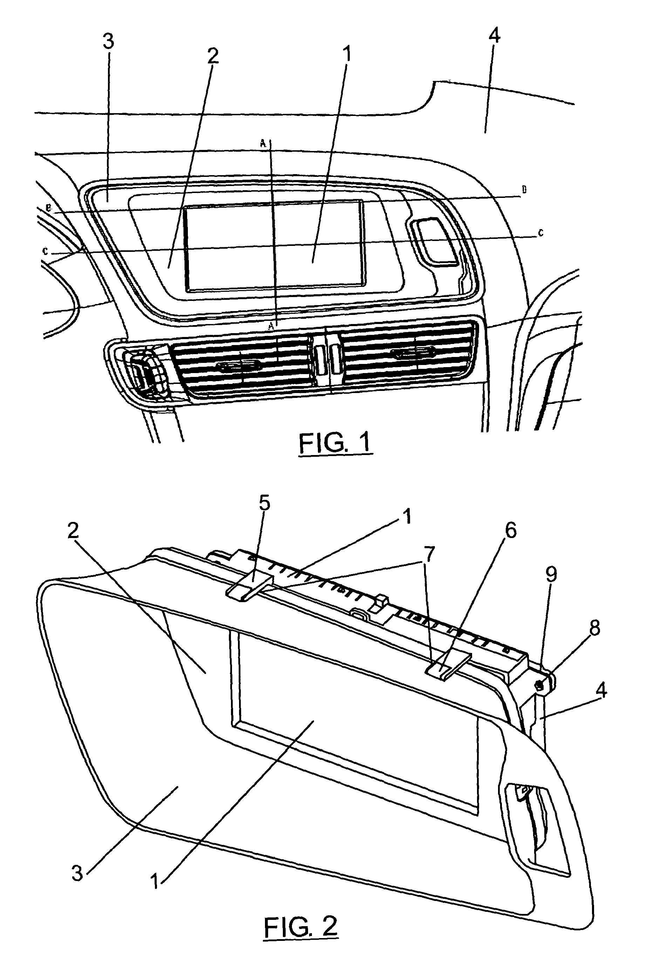

In the described figures, the car radio display is referenced with (1) the display of the auto-radio, the face of said display with (2), the radio face with (3) and the panel or dashboard of the vehicle with (4), and the appearance of these elements when assembled can be observed, especially in Figures 1 and 2.

The display face (2) has in its periphery a plurality of appropriately distributed supports (5), preferably six in number, which supports are formed by way of frontally projecting hooks, as can especially be seen in Figure 8, on each one of which an elastically deformable metal clamp (6) is assembled.

The radio face (3) is intended to be coupled to the display face (2) such that it fits between the mentioned supports (5), and such that its access to the final assembly position elastically deforms the clamps (6) to a limit situation in which said clamps lock into grooves (7) of the radio face (3) which coincide in number and position with said clamps (6).

Therefore, and as repeatedly stated, the radio face (3) must simply be "plugged into" the radio face (2), until reaching a full coupling limit position in order for the fixing between both elements, and accordingly of the radio face, to occur, without the fixing elements being invisible in the normal observation of the assembly, the one shown in Figure 1.

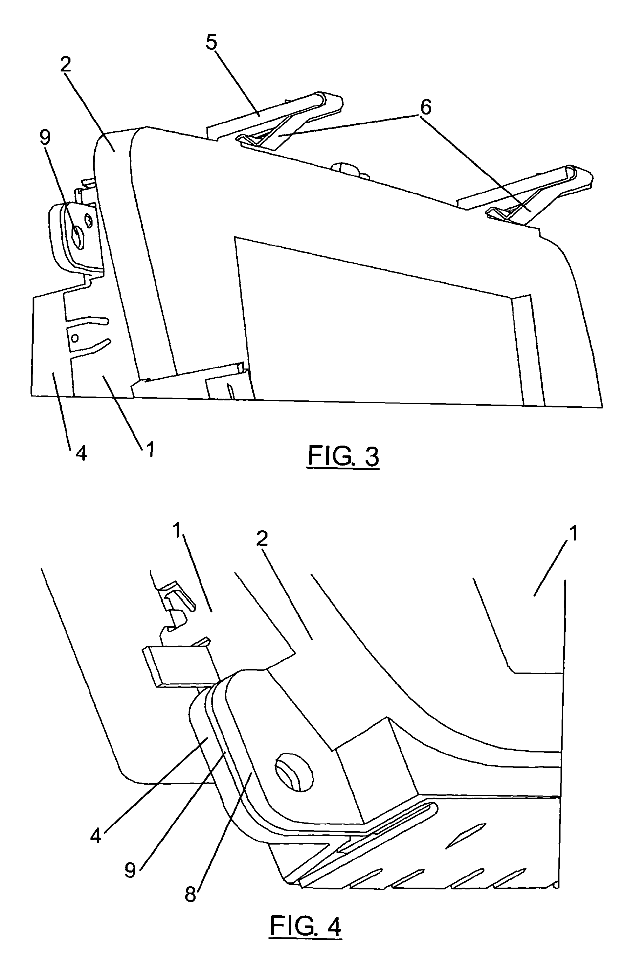

The display (1) and its face (2) have previously been fixed to the panel (4), therefore the display face (2) has perforated flaps (8) arranged in the corners, and the display (1) has also perforated flaps (9), which coincide in number and position with the aforementioned flaps, as can be seen for example in Figure 4, which allow fixing it to the panel (4) by means of screws, but these fixing screws are subsequently concealed with the assembly of the radio face (3).

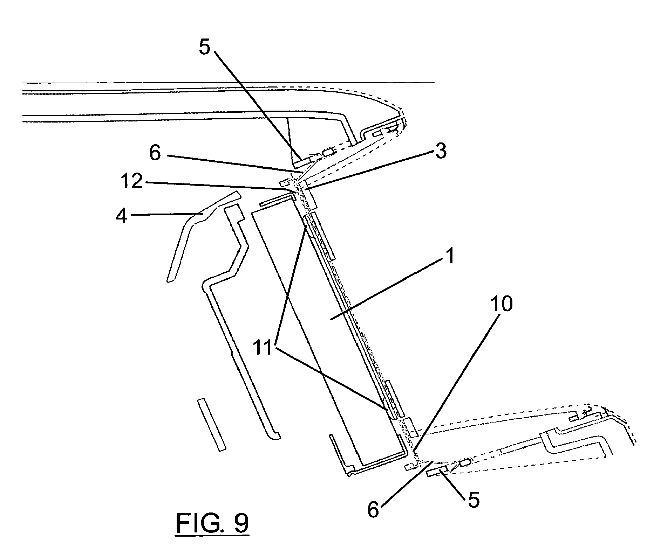

Finally and as can be seen in Figure 9, to detach the radio face (3), and subsequently all the elements arranged behind it, metal flanges (10) have been provided, being supported on the display (1) with the aid of rubber stops (11), such that such flanges (10) access the metal fixing clamps (6) through a gap or groove (12) existing between the display (1) and the back of the radio face (3), such that said flanges (10) force the clamps (6) to exit the grooves (7) of the radio face (3), the latter being released and in conditions for being extracted by simply pulling on it.

## Claims

1. A fixing device for a car radio face with invisible detachment, specifically for a radio face which is fixed to a display face which, framing the corresponding display, is in turn fixed to the panel or dashboard of the vehicle, **characterized in that** the mentioned display face incorporates in its periphery a plurality of appropriately distributed side supports which are bent frontally by way of hooks and which perimetrally frame the radio face, an elastic metal clamp being assembled on each of said supports, said clamp intended to be locked in a groove of the radio face, and said radio face having as many grooves as supports or metal clamps incorporated in the display face.

2. A fixing device for a car radio face with invisible detachment according to claim 1, **characterized in that** the display face is fixed to the display and to the support panel for supporting the radio by means of perforated flaps arranged in correspondence with the corners of both display face and the display, traversed by screws threaded in the panel and which are concealed by the radio face.

3. A fixing device for a car radio face with invisible detachment according to the previous claims, **characterized in that** it incorporates an element for detaching said radio face consisting of a group of metal flanges acting as scissors, being supported with rubber stops on the display and their ends acting on the metal clamps for their decoupling from the grooves of the radio face, for which purpose a gap or allowance is arranged between the front of the display and the back of the radio face having a sufficient magnitude so as to allow the passage of the mentioned metal flanges.
